# EUROPÄISCHE PATENTANMELDUNG

(11) **EP 2 774 710 A1**
(43) Veröffentlichungstag der Anmeldung: **10.09.2014**
(21) Anmeldenummer: 13157910.4
(22) Anmeldetag: 06.03.2013
(51) Int. Cl.: B23K 1/00, B23P 6/04, F01D 5/00

(54) **Oberflächen und Rissreparatur durch verschiedene Lotmaterialien**

(71) Anmelder: Siemens Aktiengesellschaft, 80333 München (DE)
(72) Erfinder: Piegert, Sebastian, 10777 Berlin (DE); Reinkensmeier, Ingo, 58730 Fröndenberg (DE)

(57) **Zusammenfassung**

Durch die Verwendung von zwei verschiedenen und jeweils angepassten Lotmaterialien (10, 13') kann eine Oberfläche (16) mit Rissen (7', 7") repariert werden, in dem sowohl die Risse (7', 7") optimal gefüllt werden als auch ein Oberflächenbereich aufgefüllt wird.

## Beschreibung

Die Erfindung betrifft die Reparatur einer Oberfläche, bei dem Lotmaterialien aufgespritzt werden.

Die EP 1 561 536 A1 offenbart zwei verschiedene Materialien, die in einer Mulde übereinander aufgebracht werden. Das Reparaturverfahren bezieht sich jedoch auf eine einkristalline Strukturerzeugung.

Außerdem ist es Stand der Technik vorgesinterte Lotbleche, sogenannte PSP-Elemente (Pre Sintered Preform) zu verwenden.

Außerdem gibt es bestimmte Lotmaterialien, die verwendet werden zum Engspaltlöten (Narrow gap brazing NGB).

Auch bei der Verwendung von vorgesinterten Lotblechen, oder Materialien können während des Lötens oder vorab schon Risse in dem Substrat vorhanden sein, die nur schwer oder gar nicht gefüllt werden.

Es ist daher Aufgabe der Erfindung oben genanntes Problem zu lösen.

Die Aufgabe wird gelöst durch ein Verfahren gemäß Anspruch 1 und einem Bauteil gemäß Anspruch 8.

In den Unteransprüchen sind weitere vorteilhafte Maßnahmen aufgelistet, die beliebig miteinander kombiniert werden können, um weitere Vorteile zu erzielen.

Der Vorteil des Verfahrens liegt in der guten Anbindung der Lotmaterialien an ein Substrat.

Es zeigen:
- Figur 1: ein erfindungsgemäßes Bauteil,
- Figur 2: eine Turbinenschaufel,

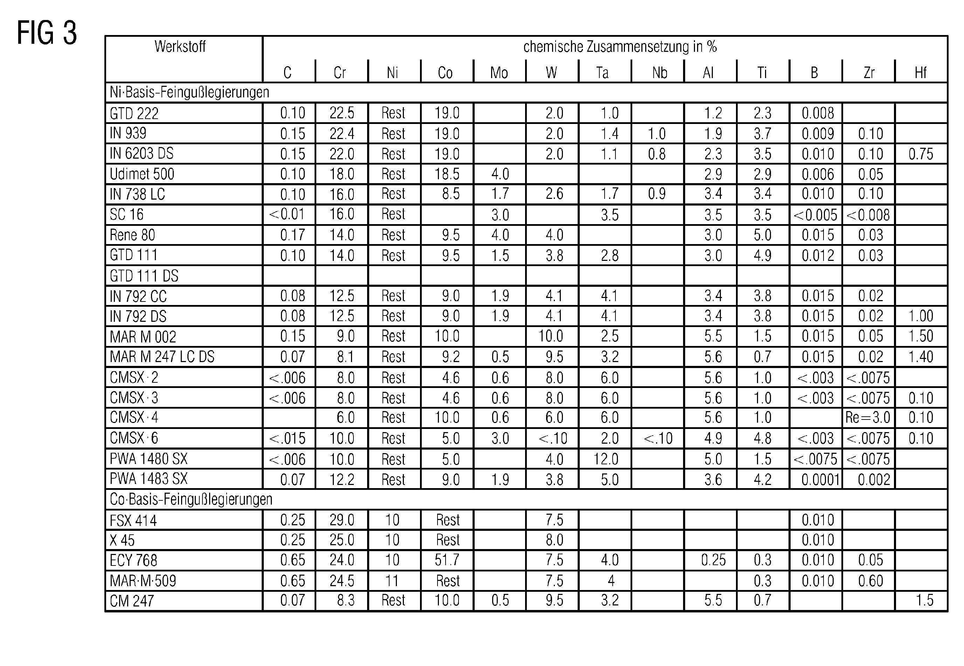

- Figur 3: eine Liste von Superlegierungen.

Die Figuren und die Beschreibung stellen nur Ausführungsbeispiele der Erfindung dar.

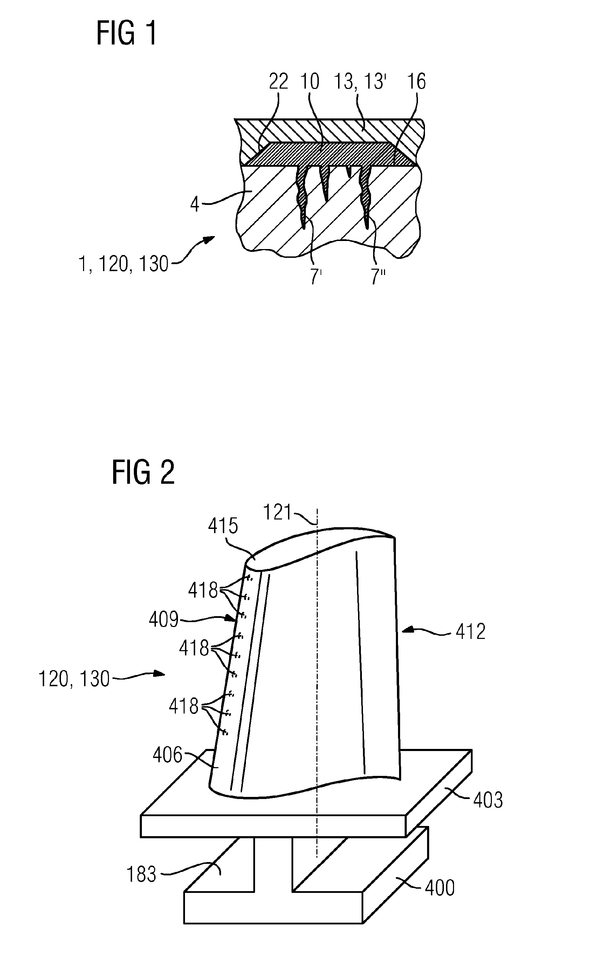

Figur 1 zeigt ein solches erfindungsgemäßes Bauteil 1, 120, 130 (Fig. 2).

Das Bauteil 1, 120, 130 weist ein Substrat 4 auf.

Das Substrat 4 kann im Bereich einer Fläche 16 zumindest einen Riss 7', 7" aufweisen auch wenn die Fläche 16 schon präpariert oder ausgemuldet wurde.

Die Fläche 16 kann eine Mulde darstellen, oder eine ebene Fläche 16, auf die Material aufgebaut werden kann, z.B. als Wandverdickung.

Ein solcher oder solche Risse 7', 7", ... werden oft durch ein spezielles erstes Lot 10 zum Engspaltlöten gefüllt.

Vorzugsweise wird das erste Lot 10 durch einen thermischen Beschichtungsprozess wie HVOF oder Kaltgasspritzen aufgebracht und/oder eingebracht.

Über dieses erste Lot 10 wird eine zweite Lotmischung 13', vorzugsweise durch thermische BEschichtungsverfahren aufgebracht.

Ebenso vorzugsweise wird auf das erste Lot 10 ein vorgesintertes und damit festes Lotblechs 13 (PSP) aus einer Lotmischung 13' aufgebracht.

Die zweite Lotmischung 13' kann eine physikalische Mischung zweier Pulver sein oder nur ein Pulver entsprechend einer zweiten Legierung.

Das vorgesintertes Lotblech 13 ist ein vorgesintertes Teil aus einer Pulvermischung eines Materials, vorzugsweise des Substrats 4 und eines Lots.

Das vorgesinterte Lotblech 13 wird vorzugsweise bei einer um mindestens 10K niedrigeren Temperatur gesintert, als es später gelötet wird.

Die Materialien des ersten Lots 10 und des vorgesinterten Lotblechs 13 bzw. der zweiten Lotmischung 13' sind deutlich verschieden voneinander, d.h. weisen andere Elemente auf oder weisen Unterschiede von mindestens 10% in zumindest einem Legierungselement auf.

Wenn für das erste Lot 10 und die zweite Lotmischung 13, 13' Pulvermischungen verwendet werden, unterscheiden sich deren Mischungsverhältnisse um mindestens 10% absolut.

Insbesondere weist das PSP-Element 13 bzw. die zweite Lotmischung 13' einen um mindestens 10K höheren Schmelzpunkt auf als das erste Lot 10.

Nachdem beide Lote 10, 13, 13' aufgebracht sind, erfolgt eine erste Wärmebehandlung, bei dem das erste Lot 10 als Engspaltlot in die ggf. vorhandenen Risse 7', 7" eindringt und das PSP-Element 13 oder die zweite Lotmischung 13' ebenfalls mit dem Substrat 4 fest verlötet wird.

Das PSP-Element 13 kann vorzugsweise auf seiner Unterseite konkav ausgebildet sein oder eine Aussparung 22 aufweisen, unter der das erste Lot 10 vorhanden ist.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren
zur Reparatur eines Substrats (4) eines Bauteils (1, 120, 130),
bei dem auf eine bereits präparierte,
insbesondere ausgearbeitete,
und zu bedeckende Fläche (16) oder Mulde
die zumindest einen Riss (7', 7") aufweisen kann,
zuerst ein erstes Lot (10) auf die Fläche (16) und/oder über den zumindest einen Riss (7', 7"),
insbesondere über die gesamte zu reparierende Fläche (16) aufgebracht wird und
eine zweite Lotmischung (13) zumindest über das erste Lot (10) aufgebracht wird.

2. Verfahren nach Anspruch 1,
bei dem das erste Lot (10) in den zumindest einen Riss (7', 7", ...) eingebracht wird.

3. Verfahren nach einem oder beiden der Ansprüche 1 oder 2, bei dem das erste Lot (10) durch ein thermisches Spritzverfahren,
insbesondere HVOF oder Kaltgasspritzen,
aufgebracht und/oder eingebracht wird.

4. Verfahren nach einem oder mehreren der Ansprüche 1, 2 oder 3,
bei dem die zweite Lotmischung (13') durch ein thermisches Spritzverfahren aufgebracht wird.

5. Verfahren nach einem oder mehreren der Ansprüche 1, 2 oder 3,
bei dem ein massives, vorgesintertes Lotblech (13) mit einer zweiten Lotmischung (13') über das erste Lot (10) aufgelegt wird.

6. Verfahren nach einem oder mehreren der Ansprüche 1, 2, 3, 4 oder 5,
bei dem der Schmelzpunkt des Materials des vorgesinterten Lotblechs (13) oder der zweiten Lotmischung (13') mindestens 10K höher ist als der des Materials des ersten Lots (10) und
mindestens 10K niedriger als der des Substrats (4).

7. Verfahren nach Anspruch 5 oder 6,
bei dem das vorgesinterte Lotblechs (13) auf der Unterseite (19),
die zum Aufliegen auf das Substrat (4) kommt,
konkav gewölbt oder eine Aussparung (22) aufweist.

8. Bauteil,
insbesondere hergestellt nach einem oder mehreren der vorherigen Ansprüche 1 bis 7,
bei dem eine Oberfläche (16) eines Substrats (4) zumindest ein Riss (7', 7", ...) aufweisen kann,
der dann mit einem ersten Lot (10) gefüllt ist oder sein kann und
bei dem über dieses erste Lot (10) eine zweite Lotmischung (13) aufgebracht ist.

9. Bauteil nach Anspruch 8,
bei dem ein massives, vorgesintertes Lotblech (13) über dem ersten Lot (10) vorhanden ist.

10. Bauteil nach einem oder beiden der Ansprüche 8 oder 9, bei dem der Schmelzpunkt des Materials eines vorgesintertes Lotblechs (13) oder der zweiten Lotmischung (13') mindestens 10K höher ist als der des ersten Lots (10) und der Schmelzpunkt des Materials des vorgesintertes Lotblechs (13) oder der zweiten Lotmischung (13') mindestens 10K niedriger ist als der des Substrats (4).
